# EUROPÄISCHE PATENTSCHRIFT

(11) **EP 2 265 476 B1**
(45) Veröffentlichungstag und Bekanntmachung des Hinweises auf die Patenterteilung: **20.06.2012**
(21) Anmeldenummer: 09728922.7
(22) Anmeldetag: 27.03.2009
(51) Int. Cl.: B60S 1/08

(54) **SCHEIBENWISCHER REVERSIERELEKTRONIK MIT BI-STABILEM RELAIS**
WINDSCREEN WIPER REVERSING ELECTRONICS WITH BI-STABLE RELAY
ÉLECTRONIQUE RÉVERSIBLE POUR ESSUIE-GLACE AVEC RELAIS BISTABLE

(30) Priorität: 03.04.2008 DE 102008000964
(43) Veröffentlichungstag der Anmeldung: 29.12.2010
(73) Patentinhaber: Robert Bosch GmbH, 70442 Stuttgart (DE)
(72) Erfinder: PAULI, Stephan, 77855 Achern (DE)
(86) Internationale Anmeldenummer: PCT/EP2009/053664
(87) Internationale Veröffentlichungsnummer: WO 2009/121809

(56) Entgegenhaltungen:
- DE-A1- 4 417 371
- DE-A1- 19 634 559
- DE-A1- 19 704 569
- FR-A- 2 415 562

## Beschreibung

### Stand der Technik

Die Erfindung betrifft eine Scheibenwischvorrichtung für Fahrzeuge, insbesondere Kraftfahrzeuge, mit mindestens einem einen vorbestimmten Wischwinkel überstreichenden Scheibenwischer und einem elektrischen Rotationsmotor zum Antrieb des Scheibenwischers.

Scheibenwischvorrichtungen haben in verschiedenen Anwendungsgebieten, wie in der Fahrzeugtechnik, eine große Bedeutung und dienen z.B. zum Säubern der Heck- oder Windschutzscheibe eines Kraftfahrzeuges, Flugzeugs, Schiffs oder eines Schienenfahrzeugs.

Aus dem Stand der Technik sind verschiedene Realisierungen von Scheibenwischvorrichtungen bekannt. Die meisten dieser Scheibenwischvorrichtungen bestehen aus einem oder mehreren Antrieben. Meist kommt ein elektrischer Rotationsmotor zum Einsatz, welcher den Scheibenwischer direkt oder über ein Gestänge antreibt. Für eine Scheibe werden im Allgemeinen ein bis drei Scheibenwischer eingesetzt. Die Scheibenwischer sind mit Wischerblättern aus Gummi bestückt und bewegen sich in kreissegmentartigen Bahnen oder in seltenen Fällen auch linear über die Scheibe. In dem überstrichenen Bereich sollen sie die Sicht frei halten.

Aus der DE 28 03 264 ist eine Scheibenwischvorrichtung bekannt, die einen Scheibenwischer und einen elektrischen Rotationsmotor zum Antrieb eines Scheibenwischers aufweist. Gemäß dieser Konstruktion ist der Scheibenwischer auf der Abtriebswelle des Motors oder eines zwischen Motor und Scheibenwischer angeordneten Unter- bzw. Übersetzungsgetriebes drehfest angeordnet, und es ist eine jeweils am Ende des Wischwinkels wirksame Umschalteinrichtung zur Drehrichtungsumkehr des Motors vorgesehen. Durch diese Maßnahme führt der Scheibenwischer eine Pendelbewegung aus, ohne dass es eines zusätzlichen Pendelgetriebes bedarf. Als eigentliche Umschalteinrichtung weist die Scheibenwischvorrichlung einen mit seinen Schaltkontakten im Motorstomkreis: liegenden Umschalter und zwei um einen dem Wischwinkel entsprechenden Drehwinkel gegeneinander versetzte Schaltstifte zur Betätigung des Umschalters auf, die starr mit dem auf der Antriebswelle drehfest angeordneten Abtriebsrad des Unter- bzw. Übersetzungsgetriebe verbunden sind.

Aus der DE 197 04 569 AI ist ein Wischersystem für ein Automobil mit einem elektrisehen Reversiermotor bekannt, welches einen Regler mit einem ersten und einein zweiten Relais zum reversierenden Zuführen elektrischen Stromes zu dem Elektromotor und einen elektrisch leitenden Positionsdetektor umfasst, der an eine Abtriebswelle des Elektromotors angeschlossen ist, mit einem ersten Segment, das sich über einen ersten Winkelbereich erstreckt, einem zweiten Segment, das sich über 360° erstreckt und koaxial zum ersten Segment angeordnet ist, und einem dritten Segment, das sich über 360° erstreckt, ausschließlich eine sektorförmige Öffnung, die zum ersten und zum zweiten Segment koaxial angeordnet ist und die sich über einen zweiten Winkelbereich erstreckt, der geringfügig größer als der erste Winkelbereich ist, wobei der elektrisch leitende Positionsdetektor ein Steuersignal an den Regler gibt, um jeden Umkehrpunkt zu erfassen und um die Zufuhr elektrischen Stromes umzukehren in Zusammenarbeit mit der drei Kontakten, die jeweils in gleitendem Eingriff mit den drei Segmenten stehen, wobei der dritte Kontakt in gleitendem Eingriff mit dem dritten Segment selektiv einen Weg für eine rcgenerative Bremswirkung des Motors erzeugt, in Zusammenarbeit mit dem dritten Relais, das vom Regler gesteuert wird.

Diese Konstruktion sowie andere aus dem Stand der Technik bekannte Konstruktionen realisieren die Reversierung des Scheibenwischers über eine Mechanik. Der Motor treibt ein Getriebe an, und aus der Vor- und Rückbewegung des Motors entsteht die Rotationsbewegung des Scheibenwischers.

Eine weiteres Verfahren zur Reversierung des Scheibenwischers liegt in der Verwendung von Doppel-II-Brückenrelais. Dazu müssen die Relais permanent angesteuert werden, was meist über eine Rechnereinheit durchgeführt wird.

Ein drittes Verfahren zur Reversierung des Scheibenwischers liegt in der Verwendung einer Halbleiter-II-Brücke.

### Offenbarung der Erfindung

Die erfindungsgemäße Scheibenwischvorrichtung weist dem gegenüber den Vorteil auf, dass sie kostengünstiger hergestellt werden kann, weniger Bauraum benötigt und ein geringeres Gewicht aufweist.

Erfindungsgemäß wird dies erreicht durch eine Scheibenwischvorrichtung für Fahrzeuge, insbesondere Kraftfahrzeuge, mit mindestens einem einen vorbestimmten Wischwinkel überstreichenden Scheibenwischer und einem elektrischen Rotationsmotor zum Antreiben des Scheibenwischers, dadurch gekennzeichnet, dass an dem Scheibenwischer drehfest zu diesem eine Signalgebervorrichtung befestigt ist, auf der Signalgebervorrichtung ein Signalgeber angeordnet ist, mit dem ein Gebersignal generierbar ist, der Signalgeber derart ausgestaltet und angeordnet ist, dass das Gebersignal am Ende des Wischwinkels generiert wird, ein durch das Gebersignal ansteuerbares Relais zur Steuerung des Rotationsmotors vorgesehen ist und das Relais als bi-stabiles Relais ausgeführt ist.

Erfindungsgemäß ist damit zur Steuerung des Rotationsmotors ein bi-stabiles Relais gegeben, das die Reversierung des Scheibenwischers, also die Vor- und Rückbewegung, bewirkt. Dadurch, dass kein Getriebe zur Reversierung des Scheibenwischers erforderlich ist, ist die Herstellung der Scheibenwischvorrichtung wesentlich erleichtert, und es lässt sich eine kompakte Bauform der Gesamteinheit erzielen. Bevorzugt ist, dass zwei Signalgeber vorgesehen sind, wobei der erste Signalgeber an dem einen Ende des Wischwinkels positioniert ist und der zweite Signalgeber an dem anderen Ende des Wischwinkels positioniert ist. Durch die Generierung des Gebersignals sind zwei definierte und stabile Parkpositionen des Scheibenwischers gegeben.

Grundsätzlich kann der Signalgeber als beliebiger Sensor ausgeführt sein. Gemäß einer bevorzugten Weiterbildung der Erfindung ist jedoch vorgesehen, dass der Signalgeber als Hall-Sensor, induktiver Sensor und/oder optischer Sensor ausgeführt ist. Der Sensor generiert das Gebersignal und zeigt das Erreichen des Endes des Wischwinkels an. Vorgenannte Signalgeber sind industriell gefertigte und präzise arbeitende Bauteile, so dass eine geringe Varianz der Endposition des Wischwinkels erreicht wird.

Eine bevorzugte Weiterbildung der Scheibenwischvorrichtung liegt ferner darin, dass die Signalgebervorrichtung als Kontaktscheibe ausgeführt ist und der Signalgeber als Kontakt ausgeführt ist. In einer bevorzugten Ausführungsform liegt der Kontakt auf der Kontaktscheibe auf. Es ist vorgesehen, dass die Kontaktscheibe aus elektrisch nichtleitendem Material ausgeführt ist, während der Kontakt aus elektrisch leitendem Material ausgeführt ist. Alternativ ist eine Isolierung zwischen dem Kontakt und der Kontaktscheibe vorgesehen, sofern der Kontakt und die Kontaktscheibe beide aus elektrisch leitendem Material ausgeführt sind.

Weiterhin ist es bevorzugt, dass der Signalgeber derart ausgestaltet und angeordnet ist, dass mittels des Gebersignals eine elektrisch leitende Verbindung zwischen einer ersten Kontaktstelle und einer zweiten Kontaktstelle herstellbar ist. Im Falle der vorab beschriebenen Ausführungsform der auf der Kontaktstelle aufliegenden Schleifkontakte bedeutet dies, dass der Kontakt die erste Kontaktstelle darstellt und der Schleifkontakt die zweite Kontaktstelle darstellt. Die elektrisch leitende Verbindung ist hergestellt zum einen bei Erreichen des einen Endes des Wischwinkels und zum anderen bei Erreichen des anderen Endes des Wischwinkels. Im Falle der vorab beschriebenen Ausführungsform des Sensors wird die elektrisch leitende Verbindung zwischen der ersten und der zweiten Kontaktstelle durch den Sensor hergestellt.

Nach einer weiteren bevorzugten Ausführungsform sind zwei bi-stabile Relais vorgesehen. An dem einen Ende des Wischwinkels steuert das Gebersignal das eine bi-stabile Relais an, während an dem anderen Ende des Wischwinkels das Gebersignal das andere bi-stabile Relais ansteuert.

Gemäß einer weiteren bevorzugten Ausführungsform sind an dem Anker eines bi-stabilen Relais zwei Spulen vorgesehen, wobei die Spulen derart angeordnet sind, dass die eine Spule bei Anlegen eines Stroms oder eines Stromimpulses den Anker in die eine Richtung zieht und die andere Spule bei Anlegen eines Stroms oder eines Stromimpulses den Anker in die andere Richtung zieht. Mit anderen Worten kann durch Anlegen eines Stroms oder eines Stromimpulses an die eine Spule der Anker in die eine Richtung bewegt werden und durch Anlegen eines Stroms oder eines Stromimpulses an die andere Spule der Anker in die andere Richtung bewegt werden.

Grundsätzlich kann ein beliebiger Transistor vorgesehen sein. Gemäß einer weiteren Ausführungsform ist es jedoch bevorzugt, dass ein Bipolartransistors vorgesehen ist, wobei der Emitter-Kollektor-Pfad des Bipolartransistors vorzugsweise im Strompfad einer der beiden Spule angeordnet ist. Ganz besonders ist es bevorzugt, den Biplortransostor als npn-Transistor auszuführen. Durch Anlegen eines Stromes oder eines Stromimpulses an die Basis des Bipolartransistors schaltet der Bipolartransistor durch und es fließt ein Strom zwischen Emitter und Kollektor. Ferner fließt dieser Strom auch durch die im Emitter-Kollektor-Pfad des Bipolartransistors angeordnete Spule.

Weiterhin ist es bevorzugt, dass die erste Kontaktstelle derart angeordnet ist, dass die eine Spule des einen bi-stabilen Relais und die eine Spule des anderen bi-stabilen Relais die erste Kontaktstelle kontaktiert, wobei der Bipolartransistor im Strompfad der Spule des anderen bi-stabilen Relais angeordnet ist. Mit anderen Worten kontaktiert je eine Spule eines der beiden Relais die erste Kontaktstelle derart, dass der Biopolartransistor nur im Strompfad einer der beiden Spulen angeordnet ist.

Gemäß einer weiteren Ausführungsform ist bevorzugt, dass die Spulen des bi-stabilen Relais derart angeordnet sind, dass diese jeweils einseitig eine Stromquelle kontaktieren und die zweite Kontaktstelle derart angeordnet ist, dass diese einen Massepunkt kontaktiert. Insbesondere bedeutet dies im Falle der vorab dargestellten Ausführungsform, dass der Schleifkontakt den Massepunkt kontaktiert. Bei Erreichen eines Endes des Wischwinkels generiert der Gebersignalgeber eine elektrisch leitende Verbindung zwischen dem Schleifkontakt und dem Kontakt. Der Kontakt kontaktiert gemäß der zuvor dargestellten weiteren Ausführungsform einseitig die eine Spule des einen bi-stabilen Relais und einseitig die eine Spule des anderen bi-stabilen Relais, wobei der Kollektor-Emitter Pfad des Bipolartransistors im Strompfad einer der beiden Spulen angeordnet ist, wobei gemäß der hier dargestellten Ausführungsform eine Stromquelle andersseitig die Spulen des bi-stabilen Relais kontaktiert. Dadurch wird ein Stromkreis geschlossen, und es fließt ein Strom durch die Spule, in deren Strompfad der Bipolartransistor nicht angeordnet ist. Die bestromte Spule verändert dadurch die Position des Ankers des bi-stabilen Relais.

Eine bevorzugte Weiterbildung der Scheibenwischvorrichtung liegt ferner darin, dass je eine Zuleitung des Rotationsmotors derart angeordnet ist, dass diese einen Umschaltkontakt eines jeweiligen bi-stabilen Relais kontaktiert, wobei die Stromquelle den einen Arbeitskontakt eines jeweiligen bi-stabilen Relais kontaktiert und der Massepunkt den anderen Arbeitskontakt eines jeweiligen bi-stabilen Relais kontaktiert, wobei der Umschaltkontakt alternativ über je einen der zwei Arbeitskontakte des jeweiligen bi-stabilen Relais kontaktierbar ist. Mit anderen Worten sind zwei Betriebszustände des Rotationsmotors möglich: Wenn beide Zuleitungen des Rotationsmotors gleichzeitig Masse kontaktieren bzw. gleichzeitig die Stromquelle kontaktieren, so dass keine Spannung am Rotationsmotor abfällt, dreht der Rotationsmotor nicht. Wenn je eine Zuleitung des Rotationsmotors Masse kontaktiert und die andere Zuleitung des Rotationsmotors die Stromquelle kontaktiert, so dass eine Spannung am Rotationsmotor abfällt, dreht der Rotationsmotor und bewegt den Scheibenwischer.

Gemäß einer weiteren Ausführungsform ist bevorzugt, dass der Signalgeber derart ausgestaltet und angeordnet ist, dass das Gebersignal an einer beliebigen Position des Wischwinkels generiert wird. Auf diese Weise sind verschiedene Parkpositionen ansteuerbar. Ganz besonders ist bevorzugt, dass eine alternierende Parkposition vorgesehen ist. Es kann vorgesehen sein, dass der Scheibenwischer am Ende des Wischwinkels, vorzugsweise am unteren, horizontalen Ende, in einer alternierenden Parkposition absenkbar ist, so dass der Scheibenwischer vor Fahrtwind geschützt werden kann. Außerdem kann gemäß einer bevorzugten Weiterbildung der Erfindung vorgesehen sein, dass der Scheibenwischer nach Erreichen des einen Endes des Wischwinkels reversiert und nach wenigen Grad in der Parkposition stoppt. Alternativ stoppt der Scheibenwischer einige Grad vor Erreichen des einen Endes des Wischwinkels in der Parkposition. Bei einer derartigen Ausgestaltung ergibt sich der Vorteil, dass die Wischerblätter aus Gummi des Scheibenwischers alternativ vor und nach dem Stoppen des Scheibenwischer reversieren, so dass sich eine alternierende Parkposition der Wischerblätter aus Gummi des Scheibenwischers ergibt. Dadurch wird die Lebensdauer der Wischerblätter aus Gummi verlängert.

Die zuvor beschriebene Scheibenwischvorrichtung findet vorzugsweise Anwendung in der Fahrzeugtechnik, z.B. in der Kraftfahrzeugtechnik. Weitere Anwendungsgebiete liegen bei Flugzeugen, Schiffen oder eines Schienenfahrzeugen.

Nachfolgend wird die Erfindung anhand bevorzugter Ausführungsbeispiele unter Bezugnahme auf die Zeichnung im Detail beschrieben. In der Zeichnung zeigen:
- Fig. 1: eine schematische Darstellung einer Scheibenwischvorrichtung gemäß einem bevorzugten Ausführungsbeispiel der Erfindung mit ihren wesentlichen Funktionsblöcken in Parkposition links,
- Fig. 2: eine schematische Darstellung einer Scheibenwischvorrichtung gemäß dem bevorzugten Ausführungsbeispiel der Erfindung mit ihren wesentlichen Funktionsblöcken zu Beginn des Rechtslaufs,
- Fig. 3: eine schematische Darstellung einer Scheibenwischvorrichtung gemäß dem bevorzugten Ausführungsbeispiel der Erfindung mit ihren wesentlichen Funktionsblöcken im Rechtslauf,
- Fig.4: eine schematische Darstellung einer Scheibenwischvorrichtung gemäß dem bevorzugten Ausführungsbeispiel der Erfindung mit ihren wesentlichen Funktionsblöcken in Parkposition rechts,
- Fig. 5: eine schematische Darstellung einer Scheibenwischvorrichtung gemäß dem bevorzugten Ausführungsbeispiel der Erfindung mit ihren wesentlichen Funktionsblöcken zu Beginn des Linkslaufs und
- Fig. 6: eine schematische Darstellung einer Scheibenwischvorrichtung gemäß dem bevorzugten Ausführungsbeispiel der Erfindung mit ihren wesentlichen Funktionsblöcken im Linkslauf.

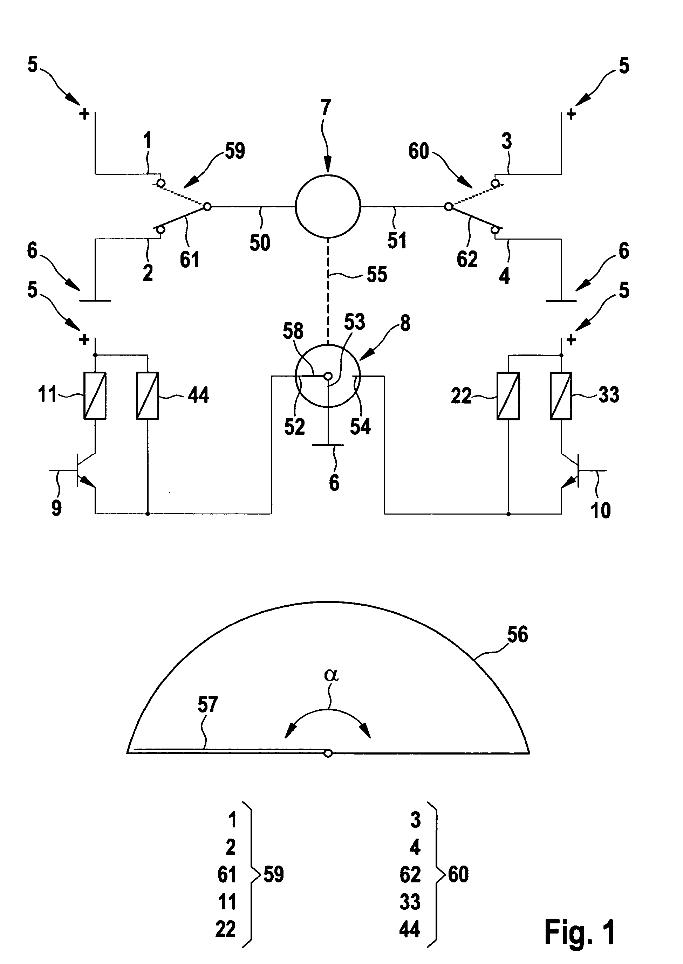

Aus den Figuren 1 bis 6 ist jeweils eine schematische Darstellung einer Scheibenwischvorrichtung gemäß einem bevorzugten Ausführungsbeispiel der Erfindung ersichtlich. Die Scheibenwischvorrichtung dient zum Steuern eines elektrischen Rotationsmotors 7 zum Antrieb eines Scheibenwischers 57 und weist eine Signalgebervornchtung 8, zwei bi-stabile Relais 59, 60, zwei bi-polare Transistoren 9, 10, eine Stromquelle 5 und einen Massepunkt 6 auf.

Wie aus Fig. 1 ersichtlich, weist jedes der beiden bi-stabilen Relais 59, 60 je einen Umschaltkontakt 61, 62, je zwei Arbeitskontakte 1, 2, 3, 4 und je zwei Spulen 11, 22, 33, 44 auf, wobei durch das Anlegen eines Stromes oder eines Stromimpulses an die jeweilige Spule 22, 44 der Anker des jeweiligen bi-stabilen Relais 59, 60 bewegt wird, so dass der jeweilige Umschaltkontakt 61, 62 den jeweiligen Arbeitskontakt 2, 4 kontaktiert. Durch das Anlegen eines Stromes oder eines Stromimpulses an die jeweilige Spule 11, 33 wird der Anker des jeweiligen bi-stabilen Relais 59, 60 bewegt, so dass der jeweilige Umschaltkontakt 61, 62 den jeweiligen Arbeitskontakt 1, 3 kontaktiert.

Im Strompfad der jeweiligen Spule 11, 33 ist der jeweilige Bipolartransistor 9, 10 angeordnet. Der Bipolartransistor schaltet bei Anlegen eines Stromes oder eines Stromimpulses die Verbindung zwischen Emitter und Kollektor durch, so dass ein Strom über die jeweilige Spule 11, 33 fließen kann.

Gemäß dem vorliegend beschriebenen Ausfiihrungsbeispiel ist die Signalgebervorrichtung als Kontaktscheibe 8 ausgeführt. Die erste Kontaktstelle 52 weist eine elektrisch leitende Verbindung zum einen mit der Spule 44 und zum anderen mit dem Emitter des Bipolartransistors 9 auf. Die zweite Kontaktstelle 53 weist eine elektrisch leitende Verbindung mit dem Massepunkt 6 auf. Im vorliegend beschriebenen Ausführungsbeispiel weist die erste Kontaktstelle 52 eine elektrisch leitende Verbindung 58 mit der zweiten Kontaktstelle 53 auf. Der Rotationsmotor 7 ist drehfest 55 mit der Kontaktscheibe 8 verbunden.

Gemäß dem vorliegend beschriebenen Ausführungsbeispiel sind beide Zuleitungen 50, 51 des Rotationsmotors 7 über die Umschaltkontakte 61, 62 mit den Arbeitskontakten 2, 4 mit dem Massepunkt 6 verbunden, was bedeutet, dass am Rotationsmotor 7 keine Spannung abfällt und der Rotationsmotor 7 den Scheibenwischer 57 nicht dreht.

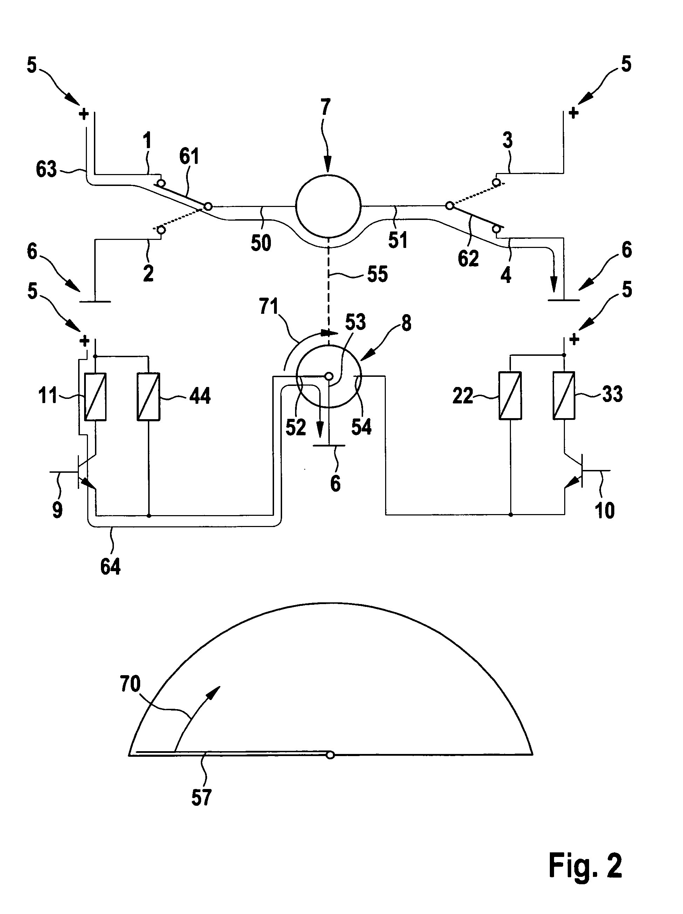

Wie aus Fig. 2 ersichtlich, wird durch Anlegen eines Stroms oder eines Stromimpuls an die Basis des Bipolartransistors 9 der Emitter-Kollektor-Pfad des Bipolartransistors 9 leitend, so dass ein Strom 64 an der Spule 11 fließt. Spule 11 bewegt dadurch den Anker des bi-stabilen Relais 59 aus der bisherigen Position, die durch eine elektrisch leitende Verbindung zwischen Umschaltkontakt 61 und Arbeitskontakt 2 gekennzeichnet ist, in eine neue Position, die durch eine elektrisch leitende Verbindung zwischen Umschaltkontakt 61 und Arbeitskontakt 1 gekennzeichnet ist.

Dadurch fließt zwischen Stromquelle 5, Arbeitskontakt 1, Umschaltkontakt 61, Rotationsmotor 7, Umschaltkontakt 62, Arbeitskontakt 4 und Massepunkt 6 ein Strom 63, der den Rotationsmotor 7 in eine Drehbewegung versetzt. Dadurch wird der Scheibenwischer 57 angetrieben. Der Scheibenwischer bewegt sich in Drehrichtung 70. Die am Scheibenwischer 57 drehfest zu diesem angeordnete Kontaktscheibe 8 dreht sich ebenfalls in Drehrichtung 71. Im vorliegend beschriebenen Ausführungsbeispiel beginnt eine Rechtsdrehung des Scheibenwischers 57 und der Kontaktscheibe 8.

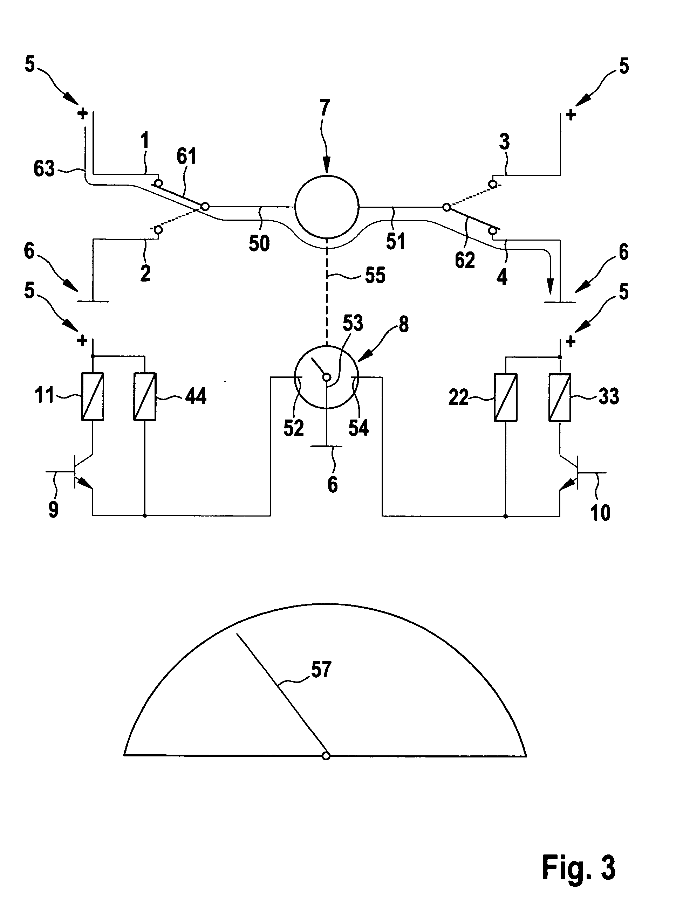

Dadurch, dass sich die Kontaktscheibe 8 dreht, wie aus Fig. 3 ersichtlich, wird die elektrisch leitende Verbindung 58 zwischen Kontaktstelle 52 und Kontaktstelle 53 unterbrochen, so dass auch die Stromzufuhr für die Spule 44 unterbrochen wird. Durch die Ausführung des Relais 60 als bi-stabiles Relais bleibt die elektrisch leitende Verbindung zwischen Umschaltkontakt 62 und Arbeitskontakt 4 jedoch bestehen. Dadurch wird der Rotationsmotor 7 weiterhin bestromt, und die Rechtsdrehung des Scheibenwischers 57 und der Kontaktscheibe 8 hält an.

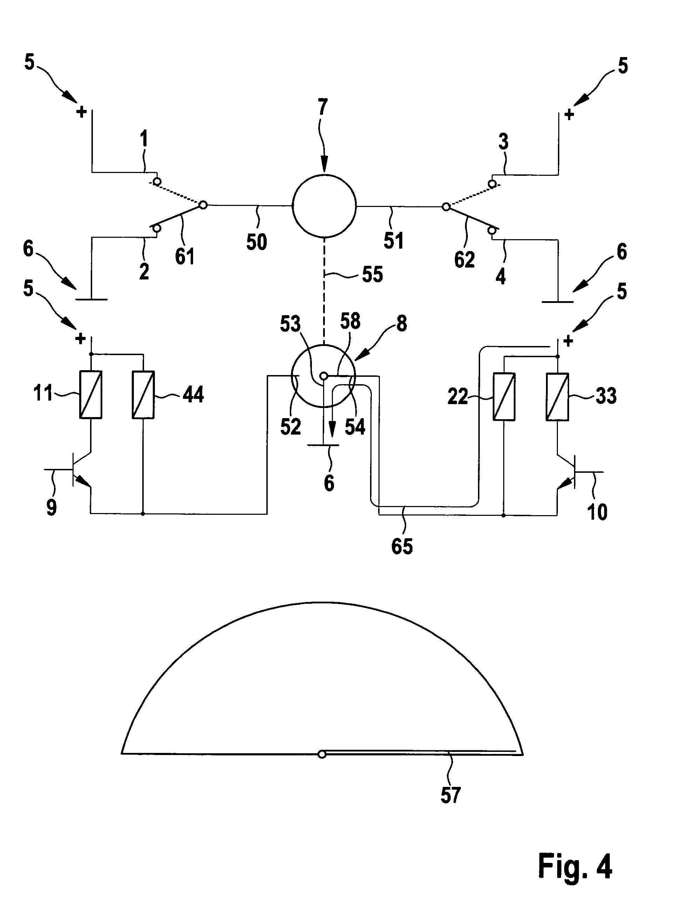

Nach einer Rechtsdrehung um den Drehwinkel α erreicht der Scheibenwischer 57 das Ende des Wischwinkels, wie aus Fig. 4 ersichtlich. Die Kontaktscheibe 8 stellt eine elektrisch leitende Verbindung 58 zwischen den Kontaktstellen 53 und 54 her, so dass ein Strom 65 über die Spule 22 fließt. Die Spule 22 unterbricht die bisherige elektrisch leitende Verbindung zwischen Arbeitskontakt 1 und Umschaltkontakt 61, und eine neue elektrisch leitende Verbindung entsteht zwischen Arbeitskontakt 2 und Umschaltkontakt 61. Ferner wird der Rotationsmotor 7 beidseitig mit dem Massepunkt 6 kontaktiert, und die Drehbewegung der Kontaktscheibe 8 und des Scheibenwischers 57 stoppt. Der Scheibenwischer 57 verharrt am Ende des Wischwinkels, z.B. in einer Park- oder Halteposition.

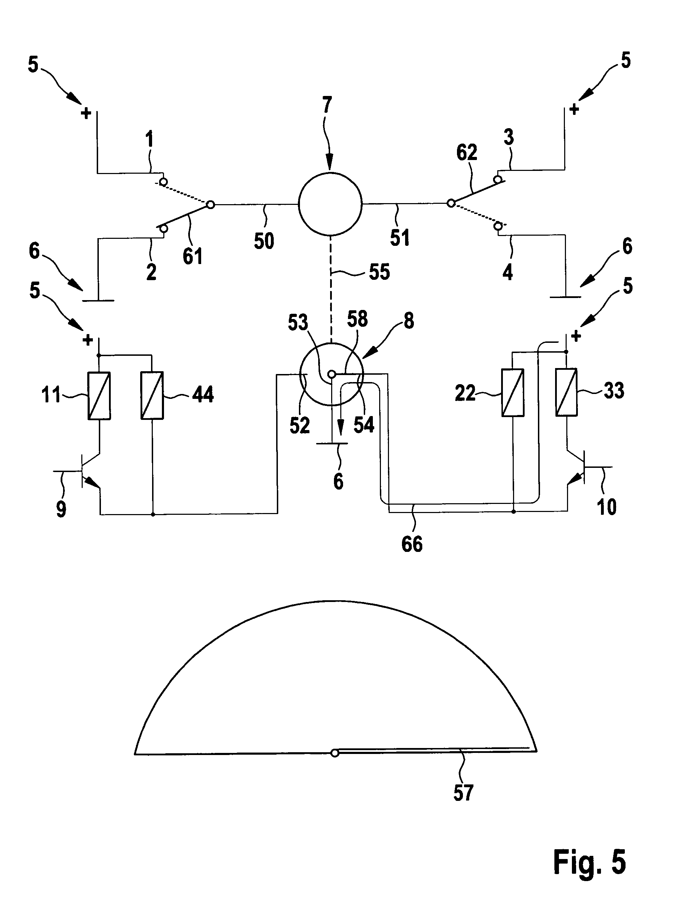

Der Rücklauf des Scheibenwischers kann durch Anlegen eines Stromes oder eines Stromimpulses an die Basis des Bipolartransistors 10 gestartet werden, wie aus Fig. 5 ersichtlich. Der Emitter-Kollektor-Pfad des Bipolartransistors 10 wird leitend, und ein Strom 66 fließt durch die Spule 3. Die Spule 3 stellt eine elektrisch leitende Verbindung zwischen Kontaktstelle 3 und Umschaltkontakt 62 her, so dass der Rotationsmotor 7 bestromt wird. Im Gegensatz zu dem vorab beschrieben Ausführungsbeispiel aus Fig. 2 beginnt der Rotationsmotor 7 eine Linksdrehung, dadurch, dass, wie aus Fig. 4 ersichtlich und im Gegensatz zu Fig. 2, die jeweils andere Zuleitung 50, 51 des Rotationsmotors 7 mit Massepunkt 6 bzw. der Stromquelle 5 elektrisch leitend verbunden ist.

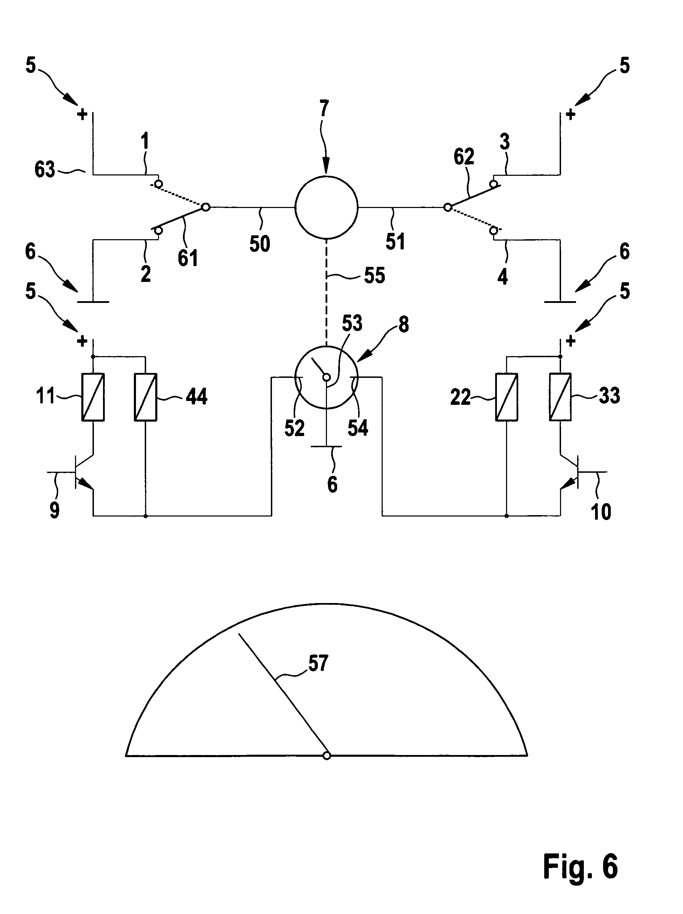

Durch die Linksdrehung des Rotationsmotors 7 werden die Kontaktscheibe 8 und der Scheibenwischer 57 gedreht, wie aus Fig. 6 ersichtlich. Dadurch wird die elektrisch leitende Verbindung zwischen Kontaktstelle 54 und Kontaktstelle 53 unterbrochen. Die Stromzufuhr für die Spule 33 wird ebenfalls unterbrochen. Die elektrisch leitende Verbindung zwischen Umschaltkontakt 62 und Arbeitskontakt 3 bleibt jedoch bestehen. Dadurch wird der Rotationsmotor 7 weiterhin bestromt, und die Linksdrehung des Scheibenwischers 57 und der Kontaktscheibe 8 hält an.

Nach Erreichen des Endes des Drehwinkels α entsteht eine elektrisch leitende Verbindung 58 zwischen Kontaktstelle 52 und Kontaktstelle 53, wie aus Fig. 1 ersichtlich. Dadurch wird die Bestromung des Rotationsmotors 7 unterbrochen, und der Scheibenwischer 57 stoppt die Drehbewegung.

## Patentansprüche

1. Scheibenwischvorrichtung für Fahrzeuge, insbesondere Kraftfahrzeuge, mit mindestens einem einen vorbestimmten Wisch winkel (a) überstreichenden Scheihenwischer (57), einem elektrischen Rotationsmotor (7) zum Abtreiben des Scheibenwischers (57) und einer Signalgebervorrichtung, wobei
auf der Signalgebervorrichtung ein Signalgeber angeordnet ist, mit dem ein Gebersignal generierbar ist,
der Signalgeber derart ausgestaltet und angeordnet ist, dass das Gebersignal am Ende des Wischwinkels generiert wird, und
ein durch das Gebersignal ansteuerbares Relais zur Steuerung des Rotationsmotors (7) vorgesehen ist
**dadurch gekennzeichnet, dass**
an dem Scheibenwischer (57) drehfest zu diesem die Signalgebervorrichtung befestigt ist, und
das Relais als bi-stabiles Relais (59,60) ausgefürt ist.

2. Scheibenwischvorrichtung nach Anspruch 1, **dadurch gekennzeichnet, dass** der Signalgeber als Hall-Sensor, induktiver Sensor und/oder optischer Sensor ausgeführt ist.

3. Scheibenwischvorrichtung nach Anspruch 1, **dadurch gekennzeichnet, dass** die Signalgebervorrichtung als Kontaktscheibe (8) ausgeführt ist und der Signalgeber als Kontakt ausgeführt ist.

4. Scheibenwischvorrichtung nach Anspruch 2 oder 3, **dadurch gekennzeichnet, dass** der Signalgeber derart ausgestaltet und angeordnet ist, dass mittels des Gebersignals eine elektrisch leitende Verbindung zwischen einer ersten Kontaktstellen (52, 54) und einer zweiten Kontaktstelle (53) herstellbar ist.

5. Scheibenwischvorrichtung nach Anspruch 4, **dadurch gekennzeichnet, dass** zwei bi-stabitc Relais (59, 60) vorgesehen sind.

6. Scheibenwischvorrichtung nach Anspruch 5 **dadurch gekennzeichnet, dass** au dem Anker eines bi-stabilen Relais (59, 60) zwei Spulen (11, 22, 33, 44) vorgesehen sind, wobei die Spulen (11, 22, 33, 41) derart angeordnet sind, dass die eine Spule (11, 33) bei Anlegen eines Stroms oder eines Stromimpulses den Anker in die eine Richtung zieht und die andere Spule (22, 44) bei Anlegen eines Stroms den Anker in die andere Richtung zieht.

7. Scheibenwischvorrichtung nach Anspruch 6, **dadurch gekennzeichnet, dass** ein Bipolartransistors (9, 10) vorgesehen ist, wobei der Emitter-Kollektor-Pfad des Bipolamansistors (9, 10) im Strompfad einer der beiden Spule (11, 33) angeordnet ist.

8. Scheibenwischvorrichtung nach Anspruch 7, **dadurch gekennzeichnet, dass** die erste Kontaktstelle (52, 54) derart angeordnet ist, dass die eine Spule (22, 44) des einen bi-stabilen Relais Relais (59, 60) und die eine Spule (11, 33) des anderen bi-stabilen Relais Relais (59, 60) die erste Kontaktstelle kontaktiert, wobei der Bipolartransistor (9, 10) im Strompfad der Spule (11,33) des anderen bi-stabilen Relais (59, 60) angeordnet ist.

9. Scheibenwischvorrichtung nach Anspruch 8, **dadurch gekennzeichnet, dass** die Spulen (11, 22, 33, 44) des bi-stabilen Relais (59, 60) derart angeordnet sind, dass diese jeweils einseitig eine Stromquelle (5) kontaktieren, und die zweite Kontaktstelle (53) derart angeordnet ist, dass diese einen Massepunkt ( 6) kontaktiert.

10. Scheibenwischvorrichtung Dach Anspruch 9, **dadurch gekennzeichnet, dass** je eine Zuleitung (50, 51) des Rotationsmotors (7) derart angeordnet ist, dass diese einen Umschaltkontakt (50, 51) eines jeweiligen bi-stabilen Relais (59, 60) kontaktiert, wobei die Stromquelle (5) den einen Arbeitskontakt (1, 3) eines jeweiligen bi-stabilen Relais (59, 60) kontaktiert und den Massepunkt (6) den anderen Arbeitskontakt (2, 4) eines jeweiligen bi-stabilen Relais (59, 60) kontaktiert wobei der Umschaltkontakt (50, 51) alternativ über je einen der beiden Arbeitskontakte (1, 2, 3, 4) des jeweiligen bi-stabilen Relais (59, 60) kontaktierbar ist.

11. Scheibenwischvorrichtung nach Anspruch 10, **dadurch gekennzeichnet, dass** der Signalgeber derart ausgestaltet und angeordnet ist, dass das Gebersignal an einer beliebigen Position des Wischwinkels generiert wird.

## Claims

1. Windscreen wiping apparatus for vehicles, in particular motor vehicles, having at least one windscreen wiper (57) which covers a predetermined wiping angle (α), an electric rotary motor (7) for driving the windscreen wiper (57), and a signal transmitter apparatus, wherein
a signal transmitter is arranged on the signal transmitter apparatus, it being possible for a transmitter signal to be generated by the said signal transmitter,
the signal transmitter is designed and arranged in such a way that the transmitter signal is generated at the end of the wiping angle, and
a relay, which can be actuated by the transmitter signal, is provided for controlling the rotary motor (7),
**characterized in that**
the signal transmitter apparatus is attached to the windscreen wiper (57) so as to rotate with the said windscreen wiper, and
the relay is in the form of a bistable relay (59, 60).

2. Windscreen wiping apparatus according to Claim 1, **characterized in that** the signal transmitter is in the form of a Hall sensor, an inductive sensor and/or an optical sensor.

3. Windscreen wiping apparatus according to Claim 1, **characterized in that** the signal transmitter apparatus is in the form of a contact disc (8) and the signal transmitter is in the form of a contact.

4. Windscreen wiping apparatus according to Claim 2 or 3, **characterized in that** the signal transmitter is designed and arranged in such a way that an electrically conductive connection can be established between a first contact point (52, 54) and a second contact point (53) by means of the transmitter signal.

5. Windscreen wiping apparatus according to Claim 4, **characterized in that** two bistable relays (59, 60) are provided.

6. Windscreen wiping apparatus according to Claim 5, **characterized in that** two coils (11, 22, 33, 44) are provided on the armature of a bistable relay (59, 60), wherein the coils (11, 22, 33, 44) are arranged in such a way that one coil (11, 33) pulls the armature in one direction when a current or a current pulse is applied to this coil, and the other coil (22, 44) pulls the armature in the other direction when a current is applied to this other coil.

7. Windscreen wiping apparatus according to Claim 6, **characterized in that** a bipolar transistor (9, 10) is provided, wherein the emitter-collector path of the bipolar transistor (9, 10) is arranged in the current path of one of the two coils (11, 33).

8. Windscreen wiping apparatus according to Claim 7, **characterized in that** the first contact point (52, 54) is arranged in such a way that one coil (22, 44) of one bistable relay (59, 60) and one coil (11, 33) of the other bistable relay (59, 60) make contact with the first contact point, wherein the bipolar transistor (9, 10) is arranged in the current path of the coil (11, 33) of the other bistable relay (59, 60).

9. Windscreen wiping apparatus according to Claim 8, **characterized in that** the coils (11, 22, 33, 44) of the bistable relay (59, 60) are arranged in such a way that the said coils each make contact with a current source (5) at one end, and the second contact point (53) is arranged in such a way that it makes contact with a mass point (6).

10. Windscreen wiping apparatus according to Claim 9, **characterized in that** each feed line (50, 51) of the rotary motor (7) is arranged in such a way that it makes contact with a switchover contact (50, 51) of a respective bistable relay (59, 60), wherein the current source (5) makes contact with one working contact (1, 3) of a respective bistable relay (59, 60) and the mass point (6) makes contact with the other working contact (2, 4) of a respective bistable relay (59, 60), wherein contact can alternatively be made with the switchover contact (50, 51) by means of in each case one of the two working contacts (1, 2, 3, 4) of the respective bistable relay (59, 60).

11. Windscreen wiping apparatus according to Claim 10, **characterized in that** the signal transmitter is designed and arranged in such a way that the transmitter signal is generated in any desired position of the wiping angle.

## Revendications

1. Dispositif d'essuie-glace pour véhicules automobiles, notamment pour véhicules équipés d'au moins un essuie-glace (57) parcourant un angle d'essuyage (α) prédéfini, d'un moteur rotatif (7) électrique conçu pour entraîner l'essuie-glace (57) et d'un dispositif d'émission de signaux ;
un émetteur de signaux permettant de générer un signal d'émetteur étant disposé sur le dispositif d'émission de signaux ;
l'émetteur de signaux étant configuré et agencé de telle sorte que le signal d'émetteur est généré à la fin de l'angle d'essuyage ; et
un relais pouvant être commandé par le signal d'émetteur étant prévu pour commander le moteur rotatif (7) ;
**caractérisé en ce que** :
le dispositif d'émission de signaux est fixé fixement sans rotation à l'essuie-glace (57) ; et
le relais prend la forme d'un relais bistable (59, 60).

2. Dispositif d'essuie-glace selon la revendication 1, **caractérisé en ce que** l'émetteur de signaux prend la forme d'un capteur de Hall, d'un capteur inductif et/ou d'un capteur optique.

3. Dispositif d'essuie-glace selon la revendication 1, **caractérisé en ce que** le dispositif d'émission de signaux prend la forme d'un disque de contact (8) et que l'émetteur de signaux prend la forme d'un contact.

4. Dispositif d'essuie-glace selon la revendication 2 ou 3, **caractérisé en ce que** l'émetteur de signaux est configuré et agencé de telle sorte qu'une liaison électriquement conductrice peut être établie entre un premier point de contact (52, 54) et un second point de contact (53) à l'aide du signal d'émetteur.

5. Dispositif d'essuie-glace selon la revendication 4, **caractérisé en ce que** deux relais bistables (59, 60) sont prévus.

6. Dispositif d'essuie-glace selon la revendication 5, **caractérisé en ce que** deux bobines (11, 22, 33, 44) sont prévues au niveau de l'ancre d'un relais bistable (59, 60), les bobines (11, 22, 33, 44) étant agencées de telle sorte que la première bobine (11, 33) tire l'ancre dans une première direction lorsqu'un courant ou une impulsion électrique est appliqué et que l'autre bobine (22, 44) tire l'ancre dans l'autre direction lorsqu'un courant est appliqué.

7. Dispositif d'essuie-glace selon la revendication 6, **caractérisé en ce qu'**un transistor bipolaire (9, 10) est prévu, le chemin collecteur-émetteur du transistor bipolaire (9, 10) étant disposé dans le chemin du courant d'une des deux bobines (11, 33).

8. Dispositif d'essuie-glace selon la revendication 7, **caractérisé en ce que** le premier point de contact (52, 54) est agencé de telle sorte que la bobine (22, 44) du relais bistable (59, 60) et la bobine (11, 33) de l'autre relais bistable (59, 60) établissent le contact avec le premier point de contact, le transistor bipolaire (9, 10) étant disposé dans le chemin de courant de la bobine (11, 33) de l'autre relais bistable (59, 60).

9. Dispositif d'essuie-glace selon la revendication 8, **caractérisé en ce que** les bobines (11, 22, 33, 44) du relais bistable (59, 60) sont agencées de telle sorte qu'elles établissent respectivement le contact unilatéralement avec une source de courant (5) et que le second point de contact (53) est agencé de telle sorte qu'il établit le contact avec un point de masse (6).

10. Dispositif d'essuie-glace selon la revendication 9, **caractérisé en ce qu'**une alimentation (50, 51) du moteur rotatif (7) est respectivement agencée de telle sorte qu'elle établit le contact avec un contact de commutation (50, 51) d'un relais bistable (59, 60) respectif, la source de courant (5) établissant le contact avec un contact fonctionnel (1, 3) d'un relais bistable (59, 60) respectif et le point de masse (6) établissant le contact avec l'autre contact fonctionnel (2, 4) d'un relais bistable (59, 60) respectif, le contact de commutation (50, 51) pouvant établir le contact alternativement par l'intermédiaire d'un des deux contacts fonctionnels (1, 2, 3, 4) du relais bistable (59, 60) respectif.

11. Dispositif d'essuie-glace selon la revendication 10, **caractérisé en ce que** l'émetteur de signaux est configuré et agencé de telle sorte que le signal d'émetteur est généré en une position quelconque de l'essuie-glace.
